# DEMANDE DE BREVET EUROPEEN

(11) **EP 4 108 079 A1**
(43) Date de publication de la demande: **28.12.2022**
(21) Numéro de dépôt: 22178105.7
(22) Date de dépôt: 09.06.2022
(51) Int. Cl.: A01K 5/02, A01K 5/00

(54) **PROCÉDÉ DE VÉRIFICATION DE LA QUALITÉ DE SERVICE D'UNE INSTALLATION D ALIMENTATION POUR ANIMAUX D ÉLEVAGE ET UNE TELLE INSTALLATION D ALIMENTATION**

(30) Priorité: 10.06.2021 FR 2106135
(71) Demandeur: Kuhn-Audureau SAS, 85260 La Copechagnière (FR)
(72) Inventeur: MABIRE, Nicolas, 56380 MONTENEUF (FR); LEGRAND, Adrien, 85000 LA ROCHE-SUR-YON (FR)
(74) Mandataire: Esch, Esther Evelyne

(57) **Abrégé**

Procédé de vérification de la qualité de service d'une installation d'alimentation pour animaux d'élevage et une telle installation d'alimentation

La présente invention a pour objet une installation d'alimentation et de vérification de la qualité de service comprenant au moins un robot (1) autonome mobile apte à se déplacer automatiquement dans l'installation pour réaliser une mission d'alimentation, l'installation comprend un dispositif de vérification (3) de la qualité de service comportant une unité de mesure (3a) permettant de mesurer au moins un paramètre de fonctionnement nécessaire au fonctionnement du robot (1) pour réaliser la mission d'alimentation, une unité de comparaison (3b) permettant de comparer la valeur mesurée du paramètre de fonctionnement avec une valeur de référence prédéterminée et mémorisée, du paramètre de fonctionnement et d'en déduire, en fonction du résultat de la comparaison, une qualité de service normale ou anormale.

## Description

La présente invention concerne le domaine des installations d'alimentation pour animaux d'élevage et a pour objet un procédé de vérification de la qualité de service d'une installation d'alimentation pour animaux d'élevage. Elle a également pour objet une installation d'alimentation d'animaux et de vérification de la qualité de service permettant la mise en oeuvre du procédé.

L'alimentation du troupeau est une astreinte majeure pour l'éleveur. Pour réduire la pénibilité, l'éleveur investit généralement dans un robot d'alimentation ou machine automatisée. Grâce à une telle solution, la ration alimentaire est adaptée à chaque lot d'animaux et les distributions journalières sont fractionnées. Il est possible de prévoir des menus différents et adaptés au jeune bétail, au cheptel laitier selon le stade de production et aux bovins de boucherie.

Avec une telle installation, plusieurs rations/recettes peuvent être programmées pour que chaque lot ou groupe d'animaux puisse accéder plusieurs fois par jour à une alimentation fraîche. Comme le robot circule de manière autonome dans l'installation/sur la ferme, il est équipé d'un système de sécurité « anticollision » (palpeur, caméras, ultrasons, Lidar) lui permettant de détecter des obstacles se trouvant sur sa trajectoire.

Pour réaliser la distribution, le robot va s'approvisionner dans un bâtiment aménagé en « cuisine » où les aliments sont stockés soit au sol dans des cellules dédiées avec une façade ouverte ou dans des stockeurs. Ici, l'automatisation n'est pas complète puisque l'éleveur doit recharger, plusieurs fois dans la semaine, la cuisine à partir des fourrages qui se situent dans des stockages dits « primaires » tels que des silos, hangars.

L'installation d'alimentation, via une mélangeuse à poste fixe, prépare l'alimentation et le robot distribue l'alimentation en toute autonomie à chaque lot spécifique d'animaux en fonction de la programmation. Avec un tel robot, les apports en alimentation peuvent être plus fréquents et en plus petites quantités pour toujours avoir assez de nourriture fraîche à l'auge.

Une telle installation d'alimentation automatisée pour les animaux d'élevage est décrite, par exemple, dans le document FR2942374A1. Cette installation comporte notamment une cuisine et un robot de distribution avec un système d'autoguidage coopérant avec un système de localisation. Le système de localisation permet au robot de déterminer sa position de façon à pouvoir adapter sa trajectoire. Il se déplace en se repérant grâce au système de localisation qui comprend des éléments de localisation (bornes émettrices de rayonnements laser / marquages au sol / des fils métalliques ou bornes magnétiques enterrés) par le système d'autoguidage du type à guidage laser / optique / magnétique. Un système de commande est prévu pour commander le robot en fonction de signaux provenant du système d'autoguidage et permet au robot de déterminer sa position par rapport à son environnement, pour se diriger et effectuer les différentes tâches de chargement et de distribution de la ration d'alimentation. Lorsque le robot est muni d'organes de mélange, il est capable de mélanger les différents aliments pour préparer la ration adaptée. Dans une variante l'installation est dépourvue de système de localisation et le système d'autoguidage fonctionne par reconnaissance d'images captées par des caméras, après apprentissage de son environnement.

Une autre machine robotisée décrite dans le document FR3082699 va puiser directement dans les stockages primaires et une cuisine n'est donc pas nécessaire. Le robot assure une ou plusieurs tâches relatives à l'alimentation des animaux. Les tâches peuvent être le chargement, le désilage, la pesée, le mélange et la distribution des produits mélangés au niveau de l'auge. Le robot peut également repousser l'alimentation vers l'auge.

Sur son parcours, le robot peut être sujet à de nombreux événements qui perturbent son cycle de travail, par exemple des arrêts dus à la présence d'objets sur sa trajectoire ou des zones de ralentissement suite à une dégradation de la surface du sol (nids de poule, boue). Ces événements vont dégrader les performances et la rentabilité du robot et donc de l'installation. L'éleveur, qui a investi dans une l'installation d'alimentation automatisée avec un robot, n'a pas à disposition de moyen lui permettant de vérifier l'efficacité de son installation au cours du temps.

Toutefois, dans de telles installations automatisées, les événements, et donc les incidents, ne sont pas facilement localisables sur le parcours du robot. Ainsi l'éleveur doit parcourir le ou les trajets du robot pour situer l'incident et pour, ensuite, apporter des actions correctives afin de retrouver une qualité de service normale/acceptable ou optimisée. L'éleveur n'a pas d'assurance que l'action qu'il a menée soit réellement au bon endroit.

La qualité de service est ainsi un indicateur important à vérifier et qui regroupe plusieurs paramètres, par exemple : nombre d'arrêts, rapport entre la vitesse théorique et la vitesse réelle, distance parcourue, vitesse moyenne.

Dans le cas où le robot fonctionne via un système de localisation utilisant un rail virtuel, c'est-à-dire sans élément de localisation (absence de bornes, de marquage au sol, de fils enterrés), la problématique de localiser un incident (anomalie, événement ou problème) est plus difficile, sachant que le robot a pu adapter sa trajectoire en fonction d'obstacles en cherchant une trajectoire de remplacement.

La présente invention a pour but de pallier ces inconvénients.

A cet effet, la présente invention a pour objet une installation d'alimentation et de vérification de la qualité de service comprenant au moins un robot autonome mobile apte à se déplacer automatiquement dans l'installation pour réaliser au moins une mission d'alimentation, la mission d'alimentation consistant, pour le robot configuré à cet effet, à réaliser une ou plusieurs tâches relatives à l'alimentation des animaux selon un cycle de travail prédéfini et au moins une unité de commande apte à gérer au moins une mission d'alimentation, ledit robot comprenant un système de navigation et un système de sécurité, se caractérisant essentiellement en ce qu'elle comprend en outre un dispositif de vérification de la qualité de service comportant une unité de mesure permettant de mesurer au moins un paramètre de fonctionnement nécessaire au fonctionnement du robot pour réaliser la ou chaque mission d'alimentation, une unité de comparaison permettant de comparer la valeur mesurée du ou de chaque paramètre de fonctionnement avec une valeur de référence ou une plage de valeurs de référence, prédéterminée et mémorisée, du paramètre de fonctionnement et d'en déduire, en fonction du résultat de la comparaison :
. dans le cas où la valeur mesurée ne correspond pas à la valeur de référence ou à une valeur de référence de la plage de valeurs de référence, une qualité de service anormale signifiant que le robot a rencontré au moins un événement au cours de sa mission perturbant son cycle de travail,
. dans le cas où la valeur mesurée correspond à la valeur de référence ou à une valeur de référence de la plage de valeurs de référence, une qualité de service normale ou optimale.

L'invention a également pour objet un procédé de vérification de la qualité de service d'une installation d'alimentation d'animaux.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

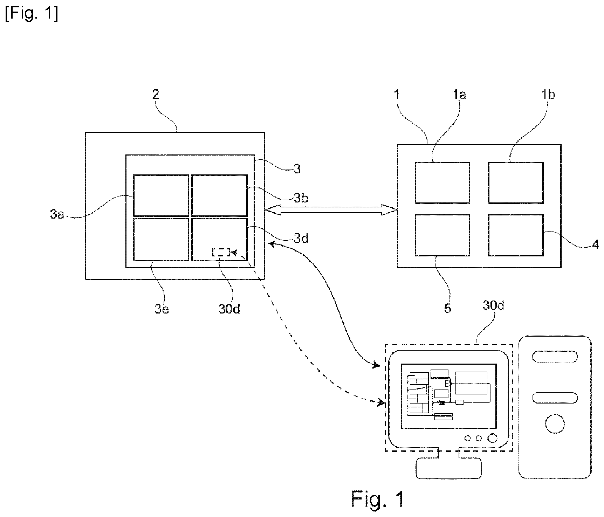

[Fig. 1] La figure 1 est schéma fonctionnel d'une installation d'alimentation et de vérification de la qualité de service selon la présente invention,
[Fig. 2] La figure 2 est une vue schématique d'une installation d'alimentation et de vérification de la qualité de service selon la présente invention pour animaux d'élevage.

Les figures montrent une installation d'alimentation et de vérification de la qualité de service, l'installation comprenant au moins un robot 1 autonome mobile apte à se déplacer automatiquement dans l'installation pour réaliser au moins une mission d'alimentation, la mission d'alimentation consistant, pour le robot 1 configuré à cet effet, à réaliser une ou plusieurs tâches relatives à l'alimentation des animaux selon un cycle de travail prédéfini et au moins une unité de commande 2 apte à gérer au moins une mission d'alimentation. Le robot 1 comprend un système de navigation 1a et un système de sécurité 1b.

Les tâches relatives à l'alimentation des animaux selon un cycle de travail prédéfini sont par exemple, pour chaque tâche : charger une quantité d'un ingrédient stocké à tel endroit, utiliser/parcourir une trajectoire pour réaliser la ou l'une des missions et la tâche, distribuer la ration ou l'ingrédient à tel lot d'animaux, à telle heure ou charger un premier puis un second ingrédient.

Conformément à la présente invention, une telle installation comprend en outre un dispositif de vérification 3 de la qualité de service comportant une unité de mesure 3a permettant de mesurer au moins un paramètre de fonctionnement nécessaire au fonctionnement du robot 1 pour réaliser la ou chaque mission d'alimentation, une unité de comparaison 3b permettant de comparer la valeur mesurée du ou de chaque paramètre de fonctionnement avec une valeur de référence ou une plage de valeurs de référence, prédéterminée et mémorisée, du paramètre de fonctionnement et d'en déduire, en fonction du résultat de la comparaison :
. dans le cas où la valeur mesurée ne correspond pas à la valeur de référence ou à une valeur de référence de la plage de valeurs de référence, une qualité de service anormale signifiant que le robot 1 a rencontré au moins un événement au cours de sa mission perturbant son cycle de travail,
. dans le cas où la valeur mesurée correspond à la valeur de référence ou à une valeur de référence de la plage de valeurs de référence, une qualité de service normale ou optimale.

Par exemple, le paramètre de fonctionnement du robot 1 est un temps de déplacement ou une vitesse de déplacement sur une trajectoire T, un débit massique lors des opérations de chargement d'un ingrédient ou de distribution de la ration.

Dans le cas où le paramètre de fonctionnement du robot 1 est un temps de déplacement, c'est-à-dire dans le cas d'une vérification du temps de déplacement du robot 1 pour parcourir la trajectoire T utilisée, c'est-à-dire lors de la réalisation de la ou de l'une des missions d'alimentation du robot 1 suivant la ou l'une des trajectoire(s) T utilisée(s) :
- l'unité de mesure 3a mesure le temps de déplacement du robot 1 pour parcourir la trajectoire T utilisée, puis
- l'unité de comparaison 3b compare la valeur mesurée avec la valeur ou plage de valeurs de référence (du temps de déplacement de la trajectoire T utilisée), pour en déduire, en fonction du résultat de la comparaison :
   . dans le cas où la valeur mesurée ne correspond pas à la valeur de référence ou à une valeur de référence de la plage de valeurs de référence, une qualité de service anormale signifiant que le robot 1 a rencontré au moins un évènement au cours de sa mission perturbant son cycle de travail,
   . dans le cas où la valeur mesurée correspond à la valeur de référence ou à une valeur de référence de la plage de valeurs de référence, une qualité de service normale ou optimale.

L'unité de commande 2 peut comprendre un calculateur, par exemple du type ordinateur, système électronique ou embarqué. Le dispositif de vérification 3, de préférence l'unité de commande 2, peut comprendre une ou plusieurs mémoire(s) pour mémoriser la ou les valeur(s) de référence et/ou la ou les plage(s) de valeur(s) de référence prédéterminée(s).

L'unité de commande 2 peut être apte à définir la ou chaque trajectoire T utilisée pour réaliser la ou chaque mission d'alimentation.

Le dispositif de vérification 3 peut être intégré, au moins en partie ou totalement, dans l'unité de commande 2.

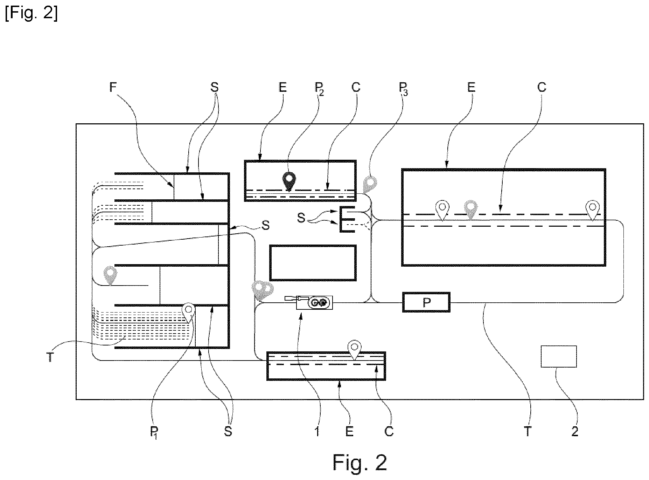

La figure 2 illustre de manière schématique, une vue de dessus de l'installation d'alimentation pour animaux d'élevage implantée dans une exploitation agricole ou ferme. L'installation est composée de zones de stockage ou silos S dans lesquels sont stockées l'alimentation ou les différents ingrédients qui composent la ration et au moins une étable E qui regroupe un ou plusieurs lots d'animaux. Chaque étable E dispose d'un couloir d'alimentation C illustré par une zone délimitée par des traits interrompus longs et courts. Le couloir d'alimentation C est la zone de circulation du robot 1 pour effectuer la distribution de l'alimentation aux différents lots d'animaux. Un ou plusieurs lots d'animaux pourra être desservi à partir du couloir d'alimentation C. Le regroupement des animaux en lots permet de leur délivrer une ration adaptée à leurs besoins. Grâce une telle installation d'alimentation automatisée, le robot 1 va pouvoir délivrer de l'alimentation fraîche plusieurs fois par jour à chaque lot d'animaux, de préférence entre trois à six fois. L'installation d'alimentation dispose également d'un parking P sur lequel le robot 1 est garé lorsqu'il est en attente d'une mission. Les différents points d'intérêts (silos S, lots d'animaux, parking...) sont reliés les uns aux autres via des trajectoires T. Les différentes trajectoires T sont matérialisées par des traits continus sur la figure 2. Une trajectoire T relie par exemple le parking P à l'un des silos S, cette trajectoire T est constituée d'une ou plusieurs parties de routes droites et d'un ou de virages. Chaque partie de route et chaque virage sont définis pour que le robot 1 puisse suivre la trajectoire T en toute sécurité compte tenu de ses caractéristiques spécifiques. A l'intérieur des silos S du type cellule à façade ouverte, plusieurs trajectoires T sont possibles, le robot 1 va emprunter la trajectoire la plus directe pour arriver en face de l'endroit où il va charger l'aliment sur le front d'attaque F du silo S concerné. Cette multitude de trajectoires T possibles est matérialisée par des traits discontinus. Le paramétrage de chaque trajectoire T est réalisé en manuel par l'éleveur ou l'utilisateur. Le paramétrage consiste à indiquer le sens de circulation autorisé sur une trajectoire T. Le sens de circulation peut évoluer en fonction de l'horaire de la journée.

On entend par robot 1 autonome mobile une machine robotisée ou automatisée mobile fonctionnant sans opérateur et avec ses propres moyens de propulsion (automoteur).

Le robot 1 peut comprendre un châssis automoteur, un moyen de stockage, du type cuve, le cas échéant du type cuve avec organe de mélange, disposé sur le châssis et un moyen de distribution de l'alimentation contenue dans la cuve. Il peut également être prévu que, de préférence à l'avant du robot 1, le châssis supporte un bras de prélèvement mobile verticalement muni d'un outil de prélèvement.

Le châssis automoteur peut être un châssis électrique, c'est-à-dire un châssis comprenant une alimentation autonome du type batterie(s) et un moyen de propulsion/moteur électrique alimenté par l'alimentation. L'alimentation autonome peut être prévue pour être rechargeable, par exemple à une borne électrique à laquelle le robot 1 peut se connecter, avec ou sans contact, dans sa position d'attente ou au retour de sa mission. La borne électrique pour le rechargement peut être prévue au niveau du parking. Le châssis peut être monté sur des roues ou des chenilles. Selon une alternative, le robot 1 dispose d'une motorisation thermique, l'appoint de carburant étant réalisé manuellement par l'éleveur ou de manière automatique.

Le système de navigation 1a peut comprendre un moyen de commande et un moyen d'autoguidage. Le système de navigation 1a, qui permet au robot 1 de déterminer sa position de façon à pouvoir adapter sa trajectoire T lors d'une mission, peut coopérer avec un moyen de localisation. L'installation peut comprendre au moins un tel moyen de localisation. Le moyen de commande du système de navigation 1a permet de commander le robot 1 en fonction des signaux provenant du moyen d'autoguidage. Dans la pratique, l'unité de commande 2 va envoyer une mission au robot 1. Cette mission/tâche consiste en par exemple à charger une certaine quantité d'un premier ingrédient ou aliment en empruntant telle trajectoire T. A réception de cette mission, le robot 1 va, depuis sa position actuelle (parking P, position à la fin de sa mission précédente), se diriger vers l'endroit concerné et charger le premier ingrédient. Lorsque le chargement est terminé, le robot 1 informe l'unité de commande 2 et reçoit la mission suivante. Dans cet exemple, la mission suivante consiste à charger une quantité déterminée d'un second ingrédient localisé dans tel silo S. Une fois tous les ingrédients chargés dans la cuve, le robot 1 reçoit une mission qui lui indique quel est le lot d'animaux (le couloir d'alimentation C ou la partie de couloir d'alimentation C) qui est destiné à recevoir cette alimentation mélangée en empruntant une trajectoire T bien définie. D'une manière alternative, le robot 1 peut recevoir une mission globale (liste des ingrédients à charger pour tel lots d'animaux) qui comporte plusieurs missions ou tâches à accomplir dans un ordre déterminé pour finalement distribuer l'alimentation fraîche au lot d'animaux concerné. La mission globale pourrait être une mission d'alimentation consistant à réaliser une ou plusieurs tâches d'alimentation selon un cycle de travail qui consiste à préparer et à nourrir au fur et à mesure tel lot d'animaux puis tel lot et ainsi de suite. Cette mission globale pourra être répartie sur une journée avec les différentes tâches à réaliser à un horaire déterminé de la journée. L'architecture électronique de l'installation d'alimentation permet l'envoi d'une mission globale et/ou d'une mission avec une tâche individuelle.

Dans une forme de réalisation particulière, le moyen de localisation peut comprendre des éléments de localisation (bornes émettrices de rayonnements laser/marquages au sol/fils métalliques ou bornes magnétiques enterrés) pouvant être détectés par le moyen d'autoguidage, par exemple à cet effet, du type à guidage laser/optique/magnétique. Dans une variante, le moyen d'autoguidage peut être, par exemple, du type à guidage optique et le moyen de localisation peut comprendre des marquages au sol pouvant être détecté par au moins un capteur optique du moyen d'autoguidage. Dans une autre variante, le moyen d'autoguidage peut être, par exemple, du type à guidage magnétique et le moyen de localisation peut comprendre des fils métalliques enterrés et/ou des bornes magnétiques enterrées pouvant être détectées par un capteur magnétique du moyen d'autoguidage. Dans une autre variante, l'installation ne comprend pas un tel moyen de localisation et le moyen d'autoguidage peut comprendre, par exemple, au moins une caméra permettant d'acquérir des images de l'environnement du robot de sorte à pouvoir détecter sa position par reconnaissance d'images, après un apprentissage de son environnement.

Le moyen de commande du système de navigation 1a communique avec l'unité de commande 2, de préférence par l'intermédiaire d'un moyen de communication (non représenté) sans fil ou d'une borne de communication à laquelle le robot 1 peut se connecter par exemple dans sa position d'attente avant de commencer sa mission ou au retour de celle-ci. L'unité de commande 2 est programmée par l'utilisateur pour permettre la mise en oeuvre d'un programme de mission d'alimentation incluant, par exemple, le nombre de distributions à réaliser dans la journée, un ordre de distribution, la composition de la ration alimentaire, la quantité de ration alimentaire à distribuer pour un lot d'animaux, la portion de couloir d'alimentation C et éventuellement la trajectoire à utiliser pour les déplacements entre les différents points d'intérêts.

Le système de sécurité 1b, connu sous le nom de système de sécurité « anticollision » (par exemple du type palpeur, caméras, ultrasons, Lidar) permet de détecter des obstacles se trouvant sur la trajectoire T du robot 1.

Le robot 1 peut être muni d'organes de mélange de sorte à pouvoir mélanger les différents aliments pour préparer la ration d'alimentation adaptée. Une vis de mélange d'axe vertical est par exemple un organe de mélange.

L'unité de commande 2 peut être située en un point fixe de l'installation, par exemple à proximité du point de départ du robot 1, par exemple au niveau du parking P, ou être située sur/dans le robot 1. Il est encore possible que l'unité de commande 2 soit localisée dans l'un des bâtiments de l'installation d'alimentation, de préférence dans le bureau de l'exploitation.

Dans un mode de réalisation préférentielle de l'invention, l'installation comprend un système de détection 4 permettant de détecter le ou chaque événement se produisant au cours de la mission d'alimentation du robot 1, plus particulièrement sur la trajectoire T du robot 1. L'installation comprend également un système de localisation 5 du robot 1 permettant de déterminer sa position lors de la détection. Le dispositif de vérification 3 comprend en outre une unité de localisation d'événement 3d configurée pour associer la position du robot 1 au ou à chaque évènement détecté de sorte à pouvoir localiser le ou chaque événement. Selon une alternative, les différents systèmes du robot 1 sont aptes à détecter un événement. Ainsi une sortie de trajectoire T par rapport à celle prévue est détectée par le système de navigation 1a. La perte du signal GPS est détectée par le système de localisation 5. Une collision pourra être détectée par le système de sécurité 1b et par le système de détection 4. De préférence, l'unité de localisation d'événement 3d peut comprendre un moyen de visualisation 30d permettant de transmettre visuellement à l'utilisateur la position du ou de chaque événement.

De préférence, le système de détection 4 et/ou le système de localisation 5 est/sont monté(s) dans le robot 1. Le système de localisation 5 peut être activé par la ou chaque détection d'événement ou être configuré pour détecter à chaque instant la position du robot 1. Le système de localisation 5 selon l'invention permet de déterminer la position du robot 1 lors de la détection d'un événement. Grâce à la position du robot 1, le système de localisation 5 est capable d'attribuer une position à l'événement détecté. Avec l'information de la position de l'événement ou de l'incident, l'utilisateur peut facilement localiser l'événement sur le parcours du robot 1. Il pourra alors apporter l'action corrective adéquate. En effet, l'unité de localisation d'événement 3d du dispositif de vérification 3 est configuré pour associer la position du robot 1 au ou à chaque événement détecté de sorte à pouvoir localiser le ou chaque événement. De manière avantageuse, la position précise de l'événement détecté est transmise visuellement à l'utilisateur. La position du ou de chaque événement détecté est visible sur le moyen de visualisation 30d, par exemple un écran. L'écran affiche alors par exemple le plan schématique de l'installation d'alimentation tel que visible sur la figure 2, avec des puces de localisation qui correspondent aux événements détectés. De manière à suivre la position du robot 1 tout au long de son parcours ou de ses parcours au sein de l'installation d'alimentation, le système de localisation 5 est configuré pour détecter la position du robot 1 à chaque instant. L'utilisateur pourra ainsi suivre le parcours et/ou localiser le robot 1 au sein de l'installation d'alimentation à tout instant, même en l'absence d'incident ou d'événement. Bien sûr une transmission visuelle de la position du robot 1, de l'événement à l'utilisateur est plus directe. Plus généralement, l'utilisateur pourra ainsi déterminer un résultat de qualité de service normale (ou optimale) ou anormale, tout en localisant précisément le(s) événement(s) se produisant au cours de la mission d'alimentation du robot 1. De plus l'utilisateur disposera également de manière visuelle la position de l'événement indépendamment de la trajectoire du robot 1.

La localisation/géolocalisation du ou de chaque événement peut être exacte (solution préférentielle), par exemple en utilisant un moyen de localisation du type GPS ou LIDAR, voire une caméra (par apprentissage de l'environnement), ou approximatif, c'est-à-dire sur une zone (pas de localisation exacte comme avec le GPS), par exemple en utilisant un moyen de localisation tels que des bornes laser ou magnétiques ou des marquages. Le système de localisation 5 peut alors être constitué par le moyen de localisation du système de navigation 1a.

Cette géolocalisation du ou des évènements permet d'optimiser les temps de déplacement du robot 1 et donc d'améliorer son efficacité.

Le système de détection 4 du ou des événements peut comprendre au moins un moyen de détection, par exemple, consistant en au moins : un capteur ultrason, une bordure sensible, une centrale inertielle, un capteur de vitesse par exemple monté sur chaque roue ou chenille du robot 1, un capteur de pression, un moyen de détection (ou télédétection) de la distance par la lumière ou par laser tel qu'un LIDAR (acronyme de l'expression anglaise « light détection and ranging ») et un calculateur, un capteur infrarouge proche (NIR), une antenne WIFI, ou combinant au moins l'un de ces moyens de détection avec le ou plusieurs autres moyens de détection de la liste, selon l'évènement à détecter. Une centrale inertielle, connue également sous le nom de centrale à inertie permet d'intégrer les mouvements (accélération et/ou vitesse angulaire) d'un mobile, ici les mouvements du robot 1, pour déterminer son orientation (angle de roulis, de tangage et de cap), sa vitesse linéaire et sa position. Le moyen de détection 4 consiste encore en au moins un capteur type pesons configurer pour peser le(les) ingrédients qui est(sont) chargé(s) dans la cuve du robot 1.

Le ou l'un des événements précités peut être compris, par exemple, dans la liste d'événements suivante :
- obstacle (voiture/tracteur/brouette...) : pouvant être détecté, par exemple, par le capteur ultrason, le LIDAR, ou la bordure sensible,
- choc : pouvant être détecté, par exemple, par la centrale inertielle,
- formation d'un trou (nid de poule) : pouvant être détectée, par exemple, par la centrale inertielle,
- inclinaison trop importante du robot 1 : pouvant être détectée, par exemple, par la centrale inertielle,
- patinage du robot 1 : pouvant être détecté, par exemple, par le capteur de vitesse,
- ralentissement du robot par un défaut de localisation : pouvant être détecté, par exemple, par le LIDAR et le calculateur,
- ralentissement du robot 1 par un déréglage du ou de l'un des capteurs de détection, pouvant être détecté, par exemple, par le LIDAR et le calculateur,
- bourrage répété au chargement ou à la distribution, pouvant être détecté, par exemple, par le capteur de pression et le capteur de vitesse,
- dysfonctionnement de dispositifs extérieurs connectés au robot (barrières, portes d'accès au sein de l'installation, vis d'alimentation pour charger des compléments nutritionnels type minéraux), pouvant être détecté, par exemple, par le capteur à ultrason et/ou le LIDAR,
- mauvaise attribution d'un site de stockage (silo S, hangar) quant au type d'ingrédient, pouvant être détectée, par exemple, par le capteur NIR,
- emplacement de stockage vide pouvant être détecté, par exemple, par un palpeur, le LIDAR, la caméra,
- éboulement du front d'attaque F d'un silo S, perte de communication dans certaines positions du robot 1 pouvant être détectée, par exemple, par le LIDAR,
- défaut de quantité d'aliment chargé détecté par les pesons,
- perte de communication dans certaines positions du robot 1, pouvant être détectée, par exemple, par le calculateur et l'antenne WIFI.

En fonctionnement, par exemple :
- A partir du robot 1 en position d'attente, l'unité de commande 2 informe le robot 1 via le moyen de communication, de sa mission d'alimentation. La mission contient généralement la trajectoire T à utiliser pour réaliser la mission d'alimentation, ainsi que d'autres données nécessaires pour sa mission tels que, par exemple, la quantité d'ingrédient à charger, la composition de ration alimentaire à distribuer pour tel lot d'animaux. Le robot 1 démarre sa mission depuis sa position d'attente en se déplaçant pour le chargement des différents aliments selon la ration alimentaire adaptée au lot d'animaux à nourrir. Le robot 1 se déplace automatiquement en se repérant grâce au système de navigation 1a vers le(s) silo(s) S pour le chargement et lorsque la ration est prête, il distribue l'alimentation préparée aux points de distributions programmés sur sa trajectoire T au niveau du couloir d'alimentation C. Une fois la distribution effectuée, le robot 1 revient au point de départ de sa mission et informe l'unité de commande 2.
- Dans le cas où au moins un événement se produit sur la trajectoire T du robot 1, celui-ci va le détecter et le localiser et informer immédiatement l'unité de commande 2. Il peut aussi informer l'unité de commande 2 de la présence de cet ou ces événements en fin de mission lors de son retour. Une fois l'événement rencontré/détecté, le robot 1 évite l'obstacle si possible et reprend sa vitesse normale (théorique) programmée pour la trajectoire T, sans changer sa vitesse, par exemple pour rattraper le temps perdu. Si l'obstacle ne peut être évité, le robot 1 informe l'unité de commande 2 via le moyen de communication. L'unité de commande 2 informera aussitôt l'éleveur via une notification (message ou appel) sur un téléphone portable, ordinateur, tablette ou similaire en indiquant que le robot 1 ne peut poursuivre sa mission. La notification pourra en plus inclure une position GPS correspondant à la position actuelle du robot 1 qui a rencontré un événement grâce au système de localisation 5.
- En fin de mission, l'unité de commande 2 compare le temps ou la vitesse de déplacement réel mis par le robot 1 depuis sa position d'attente avec un temps ou une vitesse de référence (théorique) de la trajectoire T utilisée par le robot 1 pour réaliser sa mission et en déduit, en fonction du résultat de la comparaison, si la qualité de service est normale ou non. L'utilisateur a alors la possibilité, le cas échéant, de visualiser la localisation du ou des évènements détecté(s) et localisé(s) sur le moyen de visualisation 30d pouvant être situé sur le site de l'unité de commande 2. Pour la prochaine mission du robot 1, afin de tenir compte le cas échéant de cet ou ces évènement(s), l'unité de commande 2 va transmettre au robot 1 une nouvelle trajectoire T (parmi les trajectoires de secours mémorisées) au robot 1 lui permettant d'éviter le ou les événements détecté(s) lors de sa mission précédente. Dans le cas où aucune trajectoire T de remplacement ne peut être proposée au robot 1, la présente invention peut prévoir que l'unité de commande 2 mette à l'arrêt le robot 1 en attendant que l'utilsiateur traite et supprime le ou lesdits évènement(s). Une alternative serait de prendre en compte le temps supplémentaire sur cette trajectoire T pendant un certain temps, dans le cas où l'événement ne peut pas être résolu rapidement. Une vérification précise de la qualité de service pourra être effectuée pour chaque mission, tâche et/ou trajectoire T régulièrement, par exemple chaque jour ou chaque semaine.

D'autre part, la présente invention peut prévoir que le dispositif de vérification 3 comporte un module de simulation 3e du ou d'au moins l'un des paramètres de fonctionnement du robot 1 pour réaliser la ou au moins l'une des mission(s).

Pour la définition de la ou chaque trajectoire T en fonction de la mission à réaliser, la ou l'ensemble des trajectoire(s) T créée(s) respecte la cinématique du robot 1. La présente invention peut prévoir, lorsque le ou l'un des paramètres de fonctionnement est le temps ou la vitesse de déplacement que le module de simulation 3e est un module de simulation du temps ou de la vitesse de déplacement du robot 1 pour réaliser sa mission sur une trajectoire T utilisée. Il est ainsi possible d'estimer le temps théorique nécessaire pour parcourir la ou les trajectoires T grâce au module de simulation 3e. Par défaut, le calcul de trajectoire T peut privilégier le temps de parcours le plus court. Le module de simulation 3e permet de calculer un temps de référence (théorique) de la trajectoire T utilisée, depuis un point de départ vers un point d'arrivée, en fonction de la mission programmée. On remarque sur la figure 2, qu'une partie des trajectoires T tracées/possibles au sein de l'installation d'alimentation sont prévues en extérieur c'est-à-dire qu'elles sont soumises aux conditions climatiques. Ainsi, l'unité de commande 2 peut commander exceptionnellement au robot 1 de réduire la vitesse d'avance sur certaines trajectoires T pour tenir compte des conditions météorologiques (sol mouillé, neige, verglas). Dans un tel cas (réduction de vitesse demandée), l'unité de comparaison conclura à une qualité de service anormale, puisque le temps de déplacement réel et différent (plus long) que le temps de référence. Etant donné que la réduction de vitesse qui implique un temps de déplacement plus long est une mesure de sécurité, il peut être prévu de ne pas prendre en compte ces mesures de temps dans le procédé de vérification de la qualité de service. D'autres situations particulières ou précises pourront être écartées, par volonté de l'éleveur, pour ne pas influer négativement sur la qualité de service. La réalisation de travaux au sein de l'installation d'alimentation pourra être effectuée sur une période donnée et certaines trajectoires T pourront être indisponibles ou déviées. Le paramètre de fonctionnement de référence du robot 1 ou de l'installation peut être défini par l'unité de commande 2, imposé ou donné par l'utilisateur ou encore être le résultat du module de simulation 3e. Ce paramètre de référence comme le paramètre mesuré peuvent être pondérés d'une tolérance qui prend en compte des incertitudes de mesure.

Sur son parcours, le robot 1 peut ainsi être sujet à de nombreux événements qui vont perturber son cycle de travail lors de sa mission, par exemple, comme vu précédemment, des arrêts dus à la présence d'objets sur la trajectoire T ou encore des zones de ralentissement suite à une dégradation de la surface du sol (nids de poule, boue ...). Ces événements vont dégrader les performances et la rentabilité du robot 1 et donc de l'installation. Grâce à une installation selon la présente invention, les événements, et donc les incidents, peuvent être détectés et localisés sur le parcours du robot 1. Ainsi l'utilisateur ne doit plus, contrairement aux installations actuelles, parcourir le trajet du robot 1 afin de situer l'incident pour apporter des actions correctives et retrouver une qualité de service normale. En outre, avec une installation selon la présente invention, l'éleveur/utilisateur qui se rend sur le site de l'incident est certain de la localisation exacte de ce dernier. Sur la figure 2, plusieurs événements ont été représentés au sein de l'installation d'alimentation d'animaux, plus spécifiquement sur les trajectoires T empruntées par le robot 1. Au niveau d'un des silos S, un obstacle a été détecté par le laser avant type LIDAR du robot 1, il s'agit d'un éboulement du front d'attaque F. Cet obstacle ou événement est localisé par une puce de localisation P1. Au niveau du couloir d'alimentation C, le robot 1 a détecté une personne. La puce de localisation P2 indique un patinage du robot 1 lors de la distribution de l'alimentation. Les puces de localisation P3 localisent des obstacles (brouette, personne) détectés, par exemple, par des capteurs à ultrasons situés à l'arrière du robot 1. D'une manière avantageuse et selon l'invention, les puces de locations P1, P2, P3 seront visibles par l'utilisateur/éleveur via le moyen de visualisation 30d de l'unité de localisation 3d. Avec l'information d'une qualité de service anormale et la géolocalisation du ou des événements, l'éleveur ou utilisateur devra entreprendre une action corrective adaptée, par exemple, évacuer l'objet disposé sur la trajectoire, désherber, effectuer une réfaction de la chaussée etc.., pour que l'installation d'alimentation et notamment le robot 1 retrouve une qualité de service normale.

D'une manière avantageuse, vérifier et surveiller la qualité de service d'une telle installation d'alimentation permet de prévenir des dysfonctionnements et d'anticiper des pannes éventuelles qui pourront générer des problèmes majeurs par rapport à l'alimentation des animaux de la ferme. La qualité de service est un indicateur de performance qui permet de vérifier la réalisation des différentes tâches au sein d'une ou des mission(s) d'alimentation. Pour une telle installation, l'objectif est de fournir à tout animal les éléments nutritifs nécessaires pour satisfaire au mieux ses besoins pour lui assurer une croissance et une production optimales. Un indicateur important est donc le respect de la ration distribuée par le robot, notamment sa composition. Lorsque le robot 1 reçoit une mission qui est le chargement d'une certaine quantité d'un ingrédient tel que de l'ensilage, des capteurs au niveau de l'outil de prélèvement ou du bras de prélèvement pourront mesurer un débit massique lors du chargement. Le dispositif de vérification 3 de l'installation pourra, grâce aux informations transmises par lesdits capteurs, vérifier et comparer via l'unité de comparaison 3b si la quantité chargée correspond ou non à celle prévue. Le temps de chargement au niveau du(des) silo(s) S est un indicateur qui peut être mesuré. La valeur mesurée du paramètre de fonctionnement pourra alors selon la présente invention être comparée par rapport à la valeur ou plage de valeurs de référence du paramètre de fonctionnement correspondant. Une dérive (temps plus long) peut signifier un bourrage au niveau de l'outil de prélèvement ou un colmatage du doseur du complément alimentaire sous forme de poudre ou granulés stocké dans un silo doseur. Un tel évènement sera ou pourra être détecté par l'utilisateur grâce au dispositif de vérification 3. Lors du chargement de la cuve, le robot 1 ne se déplace pas ou peu, il est/reste localisé à un endroit précis. De la même manière, le débit massique lors du déchargement de la cuve ou de la distribution de la ration en face d'un lot d'animaux défini peut être mesuré et comparé à la valeur ou plage de valeurs de référence du paramètre de fonctionnement correspondant.

Il est bien entendu que le dispositif de vérification 3 peut admettre une certaine tolérance. Dans ce cas, la plage de valeurs de référence peut être prévue pour inclure la valeur de référence et des valeurs approchées par excès et/ou par défaut, par exemple, à 10 ou 15% près de la valeur de référence. Chaque valeur de la plage est alors une valeur de référence.

L'unité de commande 2 peut être connectée et recevoir les informations météorologiques locale. Elle peut automatiquement ne pas effectuer de vérification du ou d'au moins l'un des paramètres de fonctionnement lorsque les conditions de travail sont dégradées du fait de la météo.

La présente invention a également pour objet un procédé de vérification de la qualité de service d'une installation d'alimentation d'animaux, permettant ou convenant à la mise en oeuvre d'une telle installation et procurant les avantages précités.

Un tel procédé consiste, à partir d'au moins une mission d'alimentation prédéfinie et d'une sélection d'au moins un paramètre de fonctionnement nécessaire au fonctionnement du robot 1 pour réaliser la ou chaque mission d'alimentation :
- à déterminer et à mémoriser une valeur de référence ou une plage de valeurs de référence du ou de chaque paramètre de fonctionnement,
- lors de la réalisation de la ou de l'une des missions d'alimentation du robot 1, à mesurer le ou chaque paramètre de fonctionnement, puis à comparer la valeur mesurée du ou de chaque paramètre de fonctionnement avec la valeur ou plage de valeurs référence du paramètre de fonctionnement pour en déduire, en fonction du résultat de la comparaison :
   . dans le cas où la valeur mesurée ne correspond pas à la valeur de référence ou à une valeur de référence de la plage de valeurs de référence, une qualité de service anormale signifiant que le robot 1 a rencontré au moins un événement au cours de sa mission perturbant son cycle de travail,
   . dans le cas où la valeur mesurée correspond à la valeur de référence ou à une valeur de référence de la plage de valeurs de référence, une qualité de service normale ou optimale.

D'une manière avantageuse, une telle comparaison est effectuée à la fin de chaque mission réalisée par le robot 1. Pour simplifier la démarche de vérification des incidents et événements, la qualité de service de l'installation d'alimentation pourra être effectuée/vérifiée grâce à l'utilisation d'une moyenne sur l'ensemble des missions effectuées sur une journée. Les différents événements sont enregistrés dans un journal d'événements. En effet, le robot 1 va emprunter les différentes trajectoires T plusieurs fois par jour (par exemple six fois) et ceci pourra lisser si un incident n'intervient qu'une seule fois sur les six passages du robot 1. Les incidents/événements non durables sont de la sorte pas considérés. L'éleveur pourra de ce fait réellement être alerté par les événements durables sur son installation d'alimentation automatisée.

De préférence, le procédé consiste à détecter le ou les évènement(s) se produisant au cours de la ou chaque mission d'alimentation effectuée, et éventuellement sur la trajectoire T utilisée par le robot 1 pour réaliser la mission d'alimentation. Le procédé consiste également à associer au ou à chaque évènement la position du robot 1 pour localiser le ou chaque événement.

Selon une caractéristique additionnelle du procédé, celui-ci consiste à transmettre visuellement à l'utilisateur la position du ou de chaque événement.

Selon une autre caractéristique additionnelle du procédé, dans le cas d'une qualité de service anormale, à remplacer la ou chaque valeur de référence par la valeur mesurée du paramètre de fonctionnement correspondant et/ou à remplacer la ou chaque plage de valeurs de référence par une plage de valeurs de référence incluant la valeur mesurée du paramètre de fonctionnement correspondant. Dans ce dernier il sera ou pourra être procédé à un réajustement des valeurs approchés de la plage.

De préférence, le ou l'un des paramètre(s) de fonctionnement est un temps de déplacement, un temps de chargement, une vitesse de déplacement, une vitesse de chargement, ou un débit massique.

Le ou chaque robot 1 autonome mobile est apte à se déplacer automatiquement dans l'installation suivant une trajectoire T utilisée pour réaliser la ou l'une des mission(s) d'alimentation.

Selon une caractéristique additionnelle de la présente invention, dans le cas où le ou l'un des paramètre(s) de fonctionnement est un temps de déplacement, le procédé peut consister, à partir d'une ou plusieurs trajectoire(s) T destinée(s) chacune à être utilisée par ledit robot 1 pour réaliser la ou l'une des mission(s) d'alimentation :
- à déterminer et à mémoriser une valeur de référence ou plage de valeurs de référence du temps de déplacement du robot 1 pour parcourir la ou chaque trajectoire T utilisée,
- lors de la réalisation de la ou de l'une des missions d'alimentation du robot 1 suivant la ou l'une des trajectoire(s) T utilisée(s), à mesurer le temps de déplacement du robot 1 pour parcourir la trajectoire T utilisée, puis à comparer la valeur mesurée avec la valeur de référence ou plage de valeurs de référence du temps de déplacement de la trajectoire T utilisée, pour en déduire, en fonction du résultat de la comparaison :
   . dans le cas où la valeur mesurée ne correspond pas à la valeur de référence ou à une valeur de référence de la plage de valeurs de référence, une qualité de service anormale signifiant que le robot 1 a rencontré au moins un événement au cours de sa mission perturbant son cycle de travail,
   . dans le cas où la valeur mesurée correspond à la valeur de référence ou à une valeur de référence de la plage de valeurs de référence, une qualité de service normale ou optimale.

Selon une autre caractéristique additionnelle du procédé, celui-ci consiste, dans le cas d'une qualité de service anormale, à proposer au moins une trajectoire T alternative à la trajectoire T utilisée.

On comprend que l'installation selon la présente invention permet ou convient à la mise en oeuvre du procédé selon la présente invention.

Dans la présente invention, que ce soit pour l'installation ou le procédé, dans la comparaison entre la valeur mesurée et la valeur de référence ou la plage de valeurs de référence du paramètre de fonctionnement concerné, d'autres expressions ou termes équivalent(e)s à l'expression « ne correspond pas » peuvent également être employées ou convenir telles que, par exemple : « différent », « distincte », « ne coïncide pas », « ne concorde pas », « n'est pas en accord », « n'est pas équivalent », « n'est pas similaire ». De même, d'autres expressions équivalentes à l'expression « correspond » peuvent également être employées ou convenir telles que, par exemple : « identique », « égale », « concorde », « coïncide », « est en accord », « similaire ».

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Installation d'alimentation et de vérification de la qualité de service comprenant au moins un robot (1) autonome mobile apte à se déplacer automatiquement dans l'installation pour réaliser au moins une mission d'alimentation, la mission d'alimentation consistant, pour le robot (1) configuré à cet effet, à réaliser une ou plusieurs tâches relatives à l'alimentation des animaux selon un cycle de travail prédéfini et au moins une unité de commande (2) apte à gérer au moins une mission d'alimentation, le robot (1) comprenant un système de navigation (1a) et un système de sécurité (1b), **caractérisée en ce qu'**elle comprend en outre un dispositif de vérification (3) de la qualité de service comportant une unité de mesure (3a) permettant de mesurer au moins un paramètre de fonctionnement nécessaire au fonctionnement du robot (1) pour réaliser la ou chaque mission d'alimentation, une unité de comparaison (3b) permettant de comparer la valeur mesurée du ou de chaque paramètre de fonctionnement avec une valeur de référence ou une plage de valeurs de référence, prédéterminée et mémorisée, du paramètre de fonctionnement et d'en déduire, en fonction du résultat de la comparaison :
. dans le cas où la valeur mesurée ne correspond pas à la valeur de référence ou à une valeur de référence de la plage de valeurs de référence, une qualité de service anormale signifiant que le robot (1) a rencontré au moins un événement au cours de sa mission perturbant son cycle de travail,
. dans le cas où la valeur mesurée correspond à la valeur de référence ou à une valeur de référence de la plage de valeurs de référence, une qualité de service normale ou optimale.

2. Installation selon la revendication 1, **caractérisée en ce qu'**elle comprend un système de détection (4) permettant de détecter le ou chaque évènement se produisant au cours de la mission d'alimentation du robot (1) et un système de localisation (5) du robot (1) permettant de déterminer sa position lors de la détection.

3. Installation selon la revendication 2, **caractérisée en ce que** le système de localisation (5) est activé par la ou chaque détection d'événement ou configuré pour détecter à chaque instant la position du robot (1).

4. Installation selon l'une quelconque des revendications 1 à 3, **caractérisée en ce que** le dispositif de vérification (3) comprend en outre une unité de localisation d'événement (3d) configurée pour associer la position du robot (1) au ou à chaque événement détecté de sorte à pouvoir localiser le ou chaque événement.

5. Installation selon la revendication 4, **caractérisée en ce que** l'unité de localisation d'événement (3d) comprend un moyen de visualisation (30d) permettant de transmettre visuellement à l'utilisateur la position du ou de chaque événement.

6. Installation selon l'une quelconque des revendications 1 à 5, **caractérisée en ce que** le dispositif de vérification (3) comporte un module de simulation (3e) du ou d'au moins l'un des paramètres de fonctionnement du robot (1) pour réaliser la ou au moins l'une des mission(s).

7. Procédé de vérification de la qualité de service d'une installation d'alimentation d'animaux mis en oeuvre par l'installation selon l'une quelconque des revendications 1 à 6, l'installation comprenant au moins un robot (1) autonome mobile apte à se déplacer automatiquement dans l'installation utilisée pour réaliser au moins une mission d'alimentation, la mission d'alimentation consistant, pour le robot configuré à cet effet, à réaliser une ou plusieurs tâches relatives à l'alimentation des animaux selon un cycle de travail prédéfini, **caractérisé en ce qu'**il consiste, à partir d'au moins une mission d'alimentation prédéfinie et d'une sélection d'au moins un paramètre de fonctionnement nécessaire au fonctionnement du robot (1) pour réaliser la ou chaque mission d'alimentation :
- à déterminer et à mémoriser une valeur de référence ou une plage de valeurs de référence du ou de chaque paramètre de fonctionnement,
- lors de la réalisation de la ou de l'une des missions d'alimentation du robot (1), à mesurer le ou chaque paramètre de fonctionnement, puis à comparer la valeur mesurée du ou de chaque paramètre de fonctionnement avec la valeur de référence ou la plage de valeurs de référence du paramètre de fonctionnement pour en déduire, en fonction du résultat de la comparaison :
. dans le cas où la valeur mesurée ne correspond pas à la valeur de référence ou à une valeur de référence de la plage de valeurs de référence, une qualité de service anormale signifiant que le robot (1) a rencontré au moins un événement au cours de sa mission perturbant son cycle de travail,
. dans le cas où la valeur mesurée correspond à la valeur de référence ou à une valeur de référence de la plage de valeurs de référence, une qualité de service normale ou optimale.

8. Procédé selon la revendication 7, **caractérisé en ce qu'**il consiste à détecter le ou les évènement(s) se produisant au cours de la ou chaque mission d'alimentation effectuée et à associer au ou à chaque événement la position du robot (1) pour localiser le ou chaque événement.

9. Procédé selon l'une quelconque des revendications 7 à 8, **caractérisé en ce qu'**il consiste à transmettre visuellement à l'utilisateur la position du ou de chaque événement.

10. Procédé selon l'une quelconque des revendications 7 à 9, **caractérisé en ce qu'**il consiste, dans le cas d'une qualité de service anormale, à remplacer la ou chaque valeur de référence par la valeur mesurée du paramètre de fonctionnement correspondant et/ou à remplacer la ou chaque plage de valeurs de référence par une plage de valeurs de référence incluant la valeur mesurée du paramètre de fonctionnement correspondant.

11. Procédé selon l'une quelconque des revendications 7 à 10, **caractérisé en ce que** le ou l'un des paramètre(s) de fonctionnement est un temps de déplacement, un temps de chargement, une vitesse de déplacement ou un débit massique.

12. Procédé selon la revendication 11, **caractérisé en ce que** le ou chaque robot (1) autonome mobile est apte à se déplacer automatiquement dans l'installation suivant une trajectoire (T) utilisée pour réaliser la ou l'une des mission(s) d'alimentation et **en ce qu'**il consiste, dans le cas où le ou l'un des paramètre(s) de fonctionnement est un temps de déplacement et à partir d'une ou plusieurs trajectoire(s) (T) destinée(s) chacune à être utilisée par ledit robot (1) pour réaliser la ou l'une des mission(s) d'alimentation :
- à déterminer et à mémoriser une valeur de référence ou plage de valeurs de référence du temps de déplacement du robot (1) pour parcourir la ou chaque trajectoire (T) utilisée,
- lors de la réalisation de la ou de l'une des missions d'alimentation du robot (1) suivant la ou l'une des trajectoire(s) (T) utilisée(s), à mesurer le temps de déplacement du robot (1) pour parcourir la trajectoire (T) utilisée, puis à comparer la valeur mesurée avec la valeur de référence ou plage de valeurs de référence du temps de déplacement de la trajectoire (T) utilisée, pour en déduire, en fonction du résultat de la comparaison :
. dans le cas où la valeur mesurée ne correspond pas à la valeur de référence ou à une valeur de référence de la plage de valeurs de référence, une qualité de service anormale signifiant que le robot (1) a rencontré au moins un événement au cours de sa mission perturbant son cycle de travail,
. dans le cas où la valeur mesurée correspond à la valeur de référence ou à une valeur de référence de la plage de valeurs de référence, une qualité de service normale ou optimale.
